# FASCICULE DE BREVET EUROPEEN

(11) **EP 3 974 294 B1**
(45) Date de publication et mention de la délivrance du brevet: **22.04.2026**
(21) Numéro de dépôt: 21196504.1
(22) Date de dépôt: 14.09.2021
(51) Int. Cl.: B62D 21/11, B62D 65/10, B62D 27/06, B60K 1/00

(54) **PROCÉDÉ D'ASSEMBLAGE D'UN VÉHICULE AUTOMOBILE À MOTORISATION ÉLECTRIQUE OU HYBRIDE**
VERFAHREN ZUM ZUSAMMENBAU EINES ELEKTRO- ODER HYBRIDFAHRZEUGS
METHOD FOR ASSEMBLING AN ELECTRIC OR HYBRID MOTOR VEHICLE

(30) Priorité: 25.09.2020 FR 2009757
(43) Date de publication de la demande: 30.03.2022
(73) Titulaire: Renault s.a.s, 92100 Boulogne Billancourt (FR)
(72) Inventeur: WILLEMENOT, Yohann, 92350 LE PLESSIS ROBINSON (FR)
(74) Mandataire: Renault Group

(56) Documents cités:
- EP-A1- 3 156 309
- EP-B1- 1 386 827
- EP-B1- 3 386 840
- DE-A1- 102013 013 325
- DE-A1- 102015 013 168
- DE-A1- 102016 216 219
- JP-B2- 6 071 848

## Description

L'invention concerne un procédé d'assemblage d'un véhicule automobile à motorisation électrique ou hybride selon la revendication 1.

Certains véhicules automobiles, notamment les véhicules à motorisation électrique ou hybride, comprennent un moteur électrique, notamment de traction et/ou propulsion.

Un tel moteur électrique est habituellement agencé à l'emplacement d'un berceau, par exemple à l'emplacement d'un berceau dit « berceau arrière » agencé dans la partie arrière du véhicule.

Un tel berceau, apte à supporter la suspension arrière du véhicule, a notamment pour rôle l'amortissement et la dissipation de l'énergie engendrée par un choc.

Le document DE 10 2015 013168 A1 divulgue un berceau pour véhicules électriques revcevant un moteur électrique et comprenant un support transversal avant divisé en traverses modulaires amovibles.

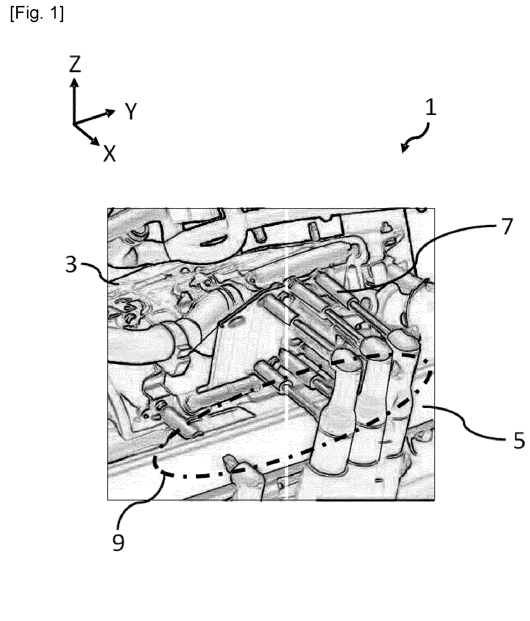

La figure 1 est une vue en perspective et de dessus représentant une partie arrière 1 d'un véhicule automobile, comprenant un moteur électrique 3 agencé à l'emplacement d'un berceau arrière. Le berceau arrière comprend une traverse arrière 5, disposée derrière le moteur électrique 3.

Le terme « arrière » est défini en référence à l'orientation longitudinale X avant-arrière du véhicule.

Il résulte d'une telle architecture que l'accès au moteur électrique 3 est difficile, à cause de la présence de la traverse arrière 5, par exemple dans la zone délimitée par des pointillés 9. Il est notamment difficile voire impossible de visser les supports de câblages 7 sur le moteur électrique 3 lors de l'assemblage du véhicule, une fois le moteur agencé sur le berceau, à cause de la présence de la traverse arrière 5.

Une solution consiste à visser le câblage sur le moteur électrique avant la mise en place du moteur électrique sur le berceau. Toutefois, cette solution présente des inconvénients. En particulier, même si cette solution résout au moins en partie le problème d'accessibilité au moteur électrique lors de l'assemblage du véhicule, il en résulte toutefois un problème d'accessibilité au moteur et à son câblage lors d'une maintenance ultérieure du véhicule, à cause de la présence de la traverse arrière.

Le but de l'invention est de fournir un procédé d'assemblage d'un véhicule automobile comprenant un tel berceau remédiant aux inconvénients ci-dessus et améliorant les berceaux et procédés d'assemblage et de maintenance connus de l'art antérieur. En particulier, l'invention permet de réaliser des procédés d'assemblage qui soient simples et qui présentent un coût réduit et qui permettent un assemblage et une maintenance du véhicule rapide.

Selon l'invention, le procédé d'assemblage concerne un véhicule comprenant un berceau. Le berceau comprend un corps, notamment destiné à être assemblé à une caisse, le berceau comprenant une traverse amovible arrière et comprenant une première configuration dans laquelle ladite traverse amovible est montée sur le corps, une première et une deuxième extrémités de ladite traverse amovible étant notamment montées respectivement sur une première et une deuxième extrémités du corps, et comprenant une deuxième configuration dans laquelle ladite traverse amovible est démontée, ce qui permet l'extraction de ladite traverse amovible.

Le berceau peut comprendre un premier et un deuxième longerons, lesdites première et deuxième extrémités de ladite traverse amovible étant montées respectivement sur une extrémité du premier longeron et sur une extrémité du deuxième longeron.

Le berceau est par exemple destiné à être installé à l'arrière d'un véhicule automobile, notamment à être assemblé à une partie arrière de la caisse, et, dans la première configuration, la première et la deuxième extrémités de ladite traverse amovible peuvent être montées respectivement sur l'extrémité arrière du premier longeron et sur l'extrémité arrière du deuxième longeron.

Dans la première configuration, ladite traverse amovible peut être fixée au corps, de façon amovible, par une liaison mécanique de type vissage.

La première extrémité de ladite traverse amovible peut comprendre au moins deux points de fixation et la deuxième extrémité de ladite traverse amovible peut comprendre au moins deux points de fixation.

Ladite traverse amovible est par exemple en acier et/ou en alliage d'aluminium et/ou en matériau composite et/ou en matériau plastique.

L'invention concerne aussi un procédé d'assemblage pour une caisse pour un véhicule automobile, notamment partie arrière, comprenant un berceau défini précédemment, et comprenant, dans la première configuration, au moins quatre moyens de fixation, notamment quatre vis de fixation, verrouillant ladite traverse amovible au corps du berceau.

L'invention concerne également un procédé d'assemblage pour un véhicule automobile à motorisation électrique ou hybride, comprenant un berceau défini précédemment ou une caisse définie précédemment, et un moteur électrique agencé sur le corps du berceau.

L'invention concerne aussi un procédé d'assemblage d'un véhicule automobile défini précédemment, comprenant les étapes suivantes :
- agencement du moteur électrique à l'emplacement du corps du berceau ;
- montage de câbles sur le moteur électrique, notamment par vissage ; puis
- montage de ladite traverse amovible sur le corps du berceau, notamment par vissage.

Les dessins annexés représentent, à titre d'exemple, un mode de réalisation d'un berceau et un mode d'exécution d'un procédé d'assemblage selon l'invention.
[Fig. 1] La figure 1 est une vue en perspective et de dessus d'une partie arrière d'un véhicule automobile.
[Fig. 2] La figure 2 est une vue en perspective et de dessus d'une partie arrière d'un véhicule automobile comprenant un mode de réalisation d'un berceau.
[Fig. 3] La figure 3 est une vue en perspective et de dessous d'une partie arrière d'un véhicule automobile comprenant un mode de réalisation d'un berceau.

L'invention propose un procédé d'assemblage d'un véhicule automobile à motorisation électrique ou hybride comprenant un berceau, le berceau comprenant un corps et une traverse amovible. Le berceau comprend une première configuration dans laquelle ladite traverse amovible est montée sur le corps, et une deuxième configuration permettant le démontage de la traverse.

La description qui suit fait référence à un repère tridimensionnel orthonormé direct (X, Y, Z). L'axe X correspond à la direction longitudinale d'un véhicule, selon laquelle le véhicule se déplace en ligne droite. L'axe Y correspond à la direction transversale du véhicule, située dans un plan parallèle au sol. L'axe Z correspond à la direction verticale. L'axe X est orienté vers l'arrière du véhicule, l'axe Y est orienté vers la droite et l'axe Z est orienté vers le haut.

Les termes « avant » et « arrière » sont définis en référence à l'orientation longitudinale avant-arrière du véhicule, et font référence au sens de déplacement en marche avant du véhicule.

Les termes « dessus » et « dessous » sont définis en référence à l'orientation verticale du véhicule.

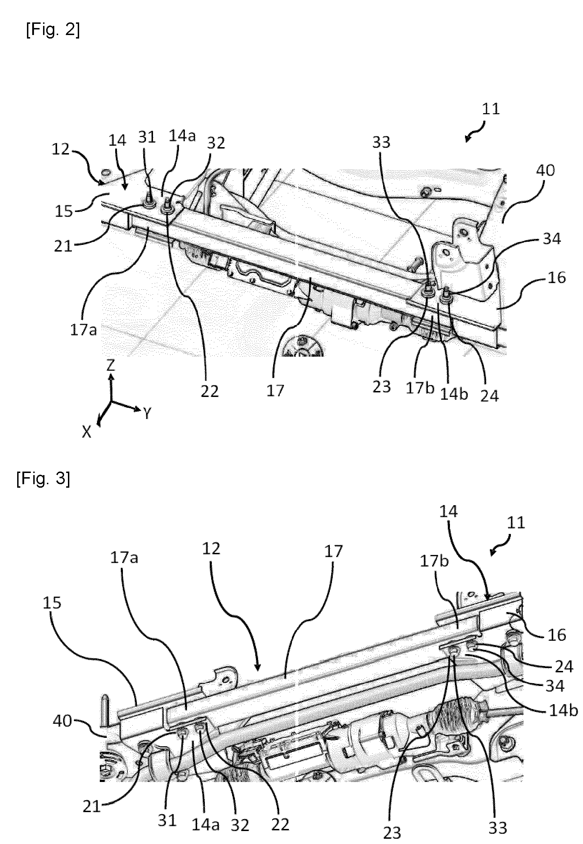

Un mode de réalisation d'un berceau 12, notamment destiné à être installé à l'arrière d'un véhicule 11, en particulier un véhicule automobile, est décrit ci-après en référence aux figures 2 et 3. Le véhicule automobile 11 peut être de tout type, notamment un véhicule de tourisme ou un véhicule utilitaire.

Le véhicule automobile 11 est par exemple un véhicule automobile à motorisation électrique ou hybride. Le véhicule 11 peut comprendre un moteur électrique, non représenté, pour sa traction et/ou sa propulsion.

Le berceau 12 est apte à être monté sur une structure de caisse 40 du véhicule 11, notamment sur une partie arrière. Dans ce cas, le berceau 12 est nommé berceau arrière.

Le berceau 12 est par exemple destiné à être assemblé à la caisse 40 du véhicule automobile 11, de préférence à l'arrière de la caisse.

Le berceau arrière 12 est notamment apte à supporter un groupe motopropulseur, comprenant notamment un moteur électrique, et/ou des éléments de suspension pour les roues arrière du véhicule 11. Le berceau arrière 12 est notamment destiné à servir de support pour le moteur électrique.

Le moteur électrique est destiné à être agencé à l'emplacement du berceau arrière 12, par exemple au milieu du berceau arrière 12. Le compartiment moteur du véhicule 11 est au moins en partie délimité par le berceau 12.

Le berceau 12 comprend un corps 14. Par « corps » du berceau, on entend notamment un futur élément de châssis du véhicule servant de support et notamment destiné à être assemblé à la caisse.

Le corps 14 du berceau 12 est par exemple destiné à être assemblé à la caisse 40 du véhicule 11. Dans une forme de réalisation particulière, le corps 14 du berceau 12 peut comprendre deux pièces allongées, ou longerons 15, 16, de direction principale sensiblement horizontale, appelées ici premier longeron 15 et deuxième longeron 16, s'étendant sensiblement selon la direction longitudinale X.

Les premier et deuxième longerons 15, 16 comprennent chacun une extrémité avant et une extrémité arrière qui peuvent être reliées à la structure de caisse 40 du véhicule.

Alternativement, les extrémités arrière des premier et deuxième longerons 15, 16 peuvent être reliées à une poutre basse de pare-chocs transversale, et les extrémités avant à la structure de caisse du véhicule. Ces longerons de berceau jouent le rôle de poutres d'absorption de chocs en tant qu'éléments destinés à transmettre les efforts du choc.

Le berceau 12 peut comprendre en outre au moins une pièce allongée, ou traverse, de direction principale sensiblement horizontale, s'étendant sensiblement selon la direction transversale Y. Une telle traverse est notamment destinée à conférer au berceau une rigidité suffisamment élevée ou à renforcer la rigidité du berceau.

Avantageusement, le berceau 12 peut comprendre trois traverses, parmi lesquelles une traverse est amovible et les deux autres traverses font partie du corps 14 du berceau 12.

La traverse amovible est la traverse arrière, c'est-à-dire la traverse destinée à être disposée la plus en arrière du véhicule.

Dans toutes les formes de réalisation, le berceau 12 comprend une traverse amovible ou démontable 17. Le corps 14 du berceau 12 est destiné à rester solidaire de la caisse. La traverse amovible 17 est amovible ou démontable de l'ensemble comprenant ladite traverse amovible 17 et le corps 14, et formant le berceau 12.

La traverse amovible 17 est apte à être montée ou à être démontée de façon indépendante du corps 14 du berceau 12, lors de l'assemblage ou lors d'une maintenance du véhicule. La traverse amovible 17 est apte à être retirée de façon indépendante de l'assemblage du véhicule automobile, par exemple lors d'une maintenance, indépendamment du corps 14 du berceau 12 restant assemblé à la caisse.

Dans une forme de réalisation particulière, le berceau 12 peut comprendre les premier et deuxième longerons 15, 16 reliés entre eux par trois traverses.

Une traverse, nommée traverse avant, non représentée, peut relier les extrémités avant du premier longeron 15 et du deuxième longeron 16.

Une autre traverse, nommée traverse intermédiaire, peut relier les premier et deuxième longerons 15, 16.

La traverse avant et la traverse intermédiaire font partie du corps 14 du berceau 12.

La troisième traverse, nommée traverse arrière, peut former la traverse amovible 17 du berceau 12. La traverse amovible 17 est par exemple destinée à relier les extrémités arrière des longerons 15, 16.

Dans toutes les formes de réalisation, le berceau 12 comprend une première configuration, dans laquelle la traverse amovible 17 est montée sur le corps 14 du berceau, et une deuxième configuration, dans laquelle la traverse amovible 17 est démontée, ce qui permet le retrait ou l'extraction de la traverse amovible 17.

Dans la première configuration du berceau 12, une première extrémité 17a et une deuxième extrémité 17b de la traverse amovible 17 peuvent être montées respectivement sur une première extrémité 14a et une deuxième extrémité 14b du corps 14.

La première extrémité 14a et la deuxième extrémité 14b du corps 14 correspondent par exemple respectivement à une extrémité du premier longeron 15 et une extrémité du deuxième longeron 16.

La première et la deuxième extrémités 17a, 17b de ladite traverse amovible 17 sont par exemple montées respectivement sur l'extrémité arrière du premier longeron 15 et sur l'extrémité arrière du deuxième longeron 16.

Les longerons 15, 16 et les traverses avant et intermédiaire peuvent être des corps creux, par exemple en acier et/ou en alliage d'aluminium et/ou en matériau composite et/ou en matériau plastique.

Avantageusement, la traverse amovible 17 est adaptée pour renforcer la raideur du berceau 12, notamment pour contribuer à encaisser les efforts du train arrière.

Les traverses avant et intermédiaire sont par exemple parallèles à la traverse amovible 17. Le nombre de traverses du berceau 12 dépend notamment du type de véhicule.

Les traverses avant et intermédiaire du berceau 12 ne posant pas ou peu de problème d'accessibilité, notamment à l'assemblage et en maintenance du véhicule, peuvent ne pas être amovibles. Il en résulte un corps plus rigide du berceau 12 et moins de fatigue des différentes pièces, notamment longerons et traverses, du berceau 12.

Selon une variante de réalisation, les traverses avant et intermédiaire du berceau 12 peuvent être amovibles.

Avantageusement, la traverse amovible 17 s'étend sensiblement parallèlement à l'axe transversal Y. La traverse amovible 17 est par exemple un corps creux. La traverse amovible 17 se présente par exemple sous la forme d'une poutre. La traverse amovible 17 est notamment configurée de sorte à participer à l'absorption des chocs latéraux au véhicule lors d'un accident.

D'autres formes pourront être prévues pour la traverse amovible 17. La traverse amovible 17 peut par exemple se présenter sous la forme d'un carré ou d'un rond ou d'un ovale ou d'un tube, ou sous la forme d'un « U » ou d'un « V » ou d'un « L » ou d'un « T », ou sous toute autre forme habituellement utilisée pour une traverse.

De préférence, la traverse amovible 17 présente une section longitudinale carrée. La section longitudinale de la traverse amovible 17 peut présenter d'autres formes, par exemple une forme rectangulaire.

La traverse amovible 17 est configurée pour qu'elle n'entraîne pas d'écart de raideur du berceau par rapport à un berceau comprenant uniquement une ou des traverse(s) non démontable(s) ou non amovible(s).

La raideur dépend notamment de la section de la traverse amovible 17, et des zones de raccordement avec les autres pièces du berceau 12.

On pourra choisir une traverse amovible 17 de section maximale et de masse minimale.

Avantageusement, la traverse amovible 17 est une pièce rigide de grande dimension mais la plus légère possible, afin de satisfaire aux contraintes en termes de masse, de tenue et d'acoustique du berceau 12.

On appelle L la longueur de la traverse amovible 17, correspondant à sa dimension selon la direction transversale Y. On appelle W la largeur de la traverse amovible 17, correspondant à sa dimension selon la direction longitudinale X. On appelle e l'épaisseur de la traverse amovible 17, correspondant à sa dimension selon la direction verticale Z.

A titre d'exemple d'ordres de grandeurs de dimension, la longueur L de la traverse amovible 17 est par exemple comprise entre 600 mm et 1000 mm, par exemple de l'ordre de 800 mm, la largeur W de la traverse amovible 17 est par exemple comprise entre 50 mm et 100 mm, par exemple de l'ordre de 60 mm, l'épaisseur e de la traverse amovible 17 est par exemple comprise entre 30 mm et 80 mm, par exemple de l'ordre de 50 mm.

A titre d'exemples de matériaux, la traverse amovible 17 peut être en acier et/ou en alliage d'aluminium et/ou en matériau composite et/ou en matériau plastique.

Selon une variante de réalisation, le berceau 12 peut comprendre en outre éventuellement un croisillon supplémentaire pour redonner de la raideur en compression et/ou torsion au berceau 12.

Dans la première configuration du berceau, la traverse amovible 17 peut être fixée au corps 14 du berceau 12, de façon amovible, par une liaison mécanique de type vissage.

La traverse amovible 17 est par exemple fixée aux premier et deuxième longerons 15, 16 du berceau 12 par une liaison mécanique de type vissage.

La liaison mécanique entre le corps 14 et la traverse amovible 17 est choisie de sorte qu'elle n'ait pas d'influence par rapport à un soudage de la traverse 17, notamment en termes de raideur ou rigidité du berceau 12.

La première extrémité 17a de la traverse amovible 17 peut comprendre au moins un point de fixation et la deuxième extrémité 17b de la traverse amovible 17 peut comprendre au moins un point de fixation.

Avantageusement, la première extrémité 17a de la traverse amovible 17 peut comprendre au moins deux points de fixation 21, 22 et la deuxième extrémité 17b de la traverse amovible 17 peut comprendre au moins deux points de fixation 23, 24. Il en résulte une meilleure reprise d'efforts par rapport à une variante avec seulement un point de fixation à chaque extrémité de la traverse amovible 17.

Selon une variante, un nombre supérieur à deux points de fixation pourrait être prévu à chaque extrémité de la traverse amovible 17.

Chaque point de fixation 21, 22, 23, 24 de la traverse amovible 17 au corps 14 du berceau 12 peut comprendre un trou qui est formé dans le corps de la traverse amovible 17 et qui est apte à recevoir un moyen de fixation, notamment une vis de fixation.

Le corps 14, notamment les longerons 15, 16, peut comprendre des ouvertures de fixation correspondantes permettant ainsi d'assurer la fixation de la traverse amovible 17 sur le corps 14 du berceau 12.

Un avantage d'un berceau du type de celui décrit ci-dessus est lié au fait qu'il permet l'utilisation de différentes traverses sur une même plateforme de véhicule, notamment associées à différentes gammes de véhicule.

Avantageusement, quatre moyens de fixation, notamment quatre vis de fixation 31, 32, 33, 34, peuvent être prévus pour fixer la traverse amovible 17 au corps 14 du berceau 12. Il en résulte une meilleure reprise d'efforts entre la traverse amovible 17 et le corps 14 du berceau 12.

Dans la première configuration du berceau 12, l'ensemble du corps 14 et de la traverse amovible 17, verrouillée au corps 14 par les vis de fixation, est solidarisé et résistant.

Selon une variante, un nombre supérieur à quatre vis de fixation pourrait être prévu.

Les vis de fixation 31, 32, 33, 34 sont adaptées pour renforcer la raideur du berceau 12. Les vis de fixation 31, 32, 33, 34 contribuent à la rigidité du berceau 12. Les vis de fixation 31, 32, 33, 34 peuvent être des vis habituellement utilisées pour l'assemblage de véhicules automobiles.

Chaque vis de fixation 31, 32, 33, 34 présente par exemple une tête en appui contre la traverse amovible 17 et un corps fileté vissé dans un trou correspondant d'un point de fixation 21, 22, 23, 24 de la traverse amovible 17. Chaque trou autorise d'une part le passage d'une tige filetée de la vis correspondante, et permet d'autre part la mise en appui de la tête de la vis correspondante contre une surface périphérique dudit trou.

Dans la première configuration, la traverse amovible 17 est ainsi verrouillée au corps 14 du berceau 12.

De préférence, dans la première configuration du berceau 12, les tiges filetées des vis 31, 32, 34, 34 vissées dans les trous 21, 22, 23, 24 peuvent être sensiblement parallèles à l'axe vertical Z.

Avantageusement, les vis sont positionnées de sorte que, dans la deuxième configuration du berceau 12 permettant le démontage de la traverse amovible 17, la traverse est démontable par en-dessous.

Ainsi, on comprend que le simple retrait des vis 31, 32, 33, 34, permet de déverrouiller l'assemblage de la traverse amovible 17 au corps 14 du berceau 12, autorisant ainsi le retrait de la traverse amovible 17 par un opérateur. Le passage de la première configuration à la deuxième configuration du berceau 12 peut être mis en œuvre par le retrait des vis 31, 32, 33, 34.

Le montage et le démontage de la traverse amovible 17 peut être réalisé par le dessous du véhicule.

Pour le dimensionnement et/ou la conception de la traverse amovible 17, des calculs de type assemblage vissé pourront être réalisés. De tels calculs peuvent prendre en compte des efforts entrants, et satisfaire à la condition selon laquelle l'assemblage du corps 14 et de la traverse amovible 17 du berceau 12 ne doit ni glisser ni se dévisser, autrement dit ne doit pas entraîner de perte de liaison.

Selon une variante d'un berceau 12 du type de celui décrit en relation avec les figures 2 et 3, la traverse amovible 17 peut également servir de support de fixation pour des éléments ou accessoires du véhicule automobile comme par exemple des câbles électriques, un pot d'échappement, un écran thermique.

Selon une réalisation, la partie arrière peut comporter un élément ou accessoire du véhicule automobile fixé à la traverse amovible 17, ledit élément ou accessoire restant fixé à la traverse amovible 17 que le berceau 12 soit dans la première configuration ou dans la deuxième configuration.

La partie arrière peut comporter un bloc moteur monté dans le compartiment moteur, à l'emplacement du berceau 12, au moins un élément du bloc moteur présentant un accès facilité lorsque la traverse amovible 17 est extraite de la partie arrière.

L'assemblage du véhicule automobile 11 et la maintenance du véhicule automobile 11 peuvent être réalisées facilement par un accès par en-dessous au compartiment moteur généré par l'absence ou le retrait de la traverse amovible 17.

L'invention est aussi relative à un procédé d'assemblage d'un véhicule automobile 11 du type de celui décrit ci-dessus. Le procédé d'assemblage peut comprendre une étape de montage de câbles du moteur électrique, notamment par vissage, puis une étape de montage de ladite traverse amovible 17 sur le corps 14 du berceau 12, notamment par vissage.

Avantageusement, la traverse amovible 17 est montée sur le corps 14 du berceau 12 après l'agencement du moteur électrique sur le berceau 12 et/ou après le montage de câbles du moteur électrique.

Le procédé d'assemblage comprend par exemple les étapes suivantes.

Dans une première étape, on assemble un corps 14 d'un berceau 12 du type de celui décrit ci-dessus à une caisse 40 d'un véhicule automobile 11.

Dans une deuxième étape, on agence un moteur électrique à l'emplacement du corps 14 du berceau 12.

Dans une troisième étape, on réalise le montage de câbles sur le moteur électrique. On relie ou on raccorde des câbles au moteur électrique, par exemple par vissage.

Dans une quatrième étape, on réalise le montage de la traverse amovible 17 sur le corps 14 du berceau 12, notamment par vissage.

La première et la deuxième extrémités 17a, 17b de ladite traverse amovible 17 sont par exemple montées respectivement sur la première et la deuxième extrémités 14a, 14b du corps 14, par exemple à des extrémités d'un premier et d'un deuxième longerons 15, 16.

Une vis de fixation 31, 32, 33, 34 peut être vissée dans chaque ouverture d'un point de fixation correspondant 21, 22, 23, 24 de la traverse amovible 17 alignée avec une ouverture correspondante du corps 14. La traverse amovible 17 est ainsi verrouillée au corps 14 du berceau 12.

Un avantage d'un procédé d'assemblage du type de celui décrit ci-dessus est lié au fait que des opérateurs peuvent visser tout ou partie du câblage moteur électrique sans problème d'accessibilité, puis monter la traverse amovible 17 sur le corps 14 du berceau 12.

Un autre avantage d'un procédé d'assemblage du type de celui décrit ci-dessus réside dans le fait qu'il n'est pas nécessaire de monter le câblage sur le moteur avant que le moteur soit présent sur le berceau. En effet, la partie du moteur destinée au vissage des câbles est accessible même si le moteur est présent sur le berceau, grâce à un accès laissé libre par l'absence de la traverse amovible 17 lors du montage des câbles du moteur.

Un avantage d'un berceau du type de celui décrit en relation avec les figures 2 et 3 réside dans le fait qu'il permet un assemblage et une maintenance du véhicule simple, rapide et présentant un coût réduit, notamment en ce qui concerne le montage et la maintenance du bloc moteur électrique.

Bien que les modes de réalisation aient été décrits ci-dessus notamment dans le cas d'un berceau comprenant un corps muni de deux traverses et deux longerons reliés entre eux par les traverses, ils s'appliquent bien entendu à tout type de berceau, notamment tout type de corps de berceau. Le corps de berceau pourra comprendre des nombres variés de longerons et de traverses, ainsi que toute configuration géométrique des longerons et des traverses.

Bien que l'invention ait été décrite ci-dessus dans le cas d'un procédé d'assemblage d'un véhicule comprenant un berceau arrière d'un véhicule automobile, l'invention s'applique bien entendu à un berceau avant, destiné à être agencé dans une partie avant d'un véhicule automobile.

Bien que l'invention ait été décrite ci-dessus dans le cas d'un procédé d'assemblage d'un véhicule comprenant un berceau susceptible de supporter un moteur électrique d'un véhicule à motorisation électrique ou hybride, l'invention s'applique bien entendu à un berceau susceptible de supporter d'autres éléments fonctionnels d'un véhicule, comme par exemple un réservoir d'essence ou une batterie.

## Revendications

1. Procédé d'assemblage d'un véhicule automobile (11) à motorisation électrique ou hybride, le véhicule automobile comprenant un berceau (12), le berceau comprenant un corps (14) destiné à être assemblé à une caisse (40) et une traverse amovible arrière (17), le berceau comprenant une première configuration dans laquelle ladite traverse amovible (17) est montée sur le corps (14), une première et une deuxième extrémités (17a, 17b) de ladite traverse amovible (17) étant montées respectivement sur une première et une deuxième extrémités (14a, 14b) du corps (14), et le berceau comprenant une deuxième configuration dans laquelle ladite traverse amovible (17) est démontée, ce qui permet l'extraction de ladite traverse amovible (17),
le procédé d'assemblage comprenant les étapes suivantes :
- agencement du moteur électrique à l'emplacement du corps (14) du berceau (12) ;
- montage de câbles sur le moteur électrique, notamment par vissage ; puis
- montage de ladite traverse amovible (17) sur le corps (14) du berceau (12), notamment par vissage.

## Patentansprüche

1. Verfahren zum Zusammenbau eines Kraftfahrzeugs (11) mit Elektro- oder Hybridantrieb, wobei das Kraftfahrzeug einen Hilfsrahmen (12) beinhaltet, wobei der Hilfsrahmen einen Körper (14) zum Zusammenbau mit einer Karosserie (40) und einen hinteren abnehmbaren Querträger (17) beinhaltet, wobei der Hilfsrahmen eine erste Konfiguration beinhaltet, in der der abnehmbare Querträger (17) an dem Körper (14) montiert ist, wobei ein erstes und ein zweites Ende (17a, 17b) des abnehmbaren Querträgers (17) jeweils an einem ersten und einem zweiten Ende (14a, 14b) des Körpers (14) montiert sind, und der Hilfsrahmen eine zweite Konfiguration beinhaltet, in der der abnehmbare Querträger (17) demontiert ist, was das Entfernen des abnehmbaren Querträgers (17) ermöglicht,
wobei das Zusammenbauverfahren die folgenden Schritte beinhaltet:
- Anordnen des Elektromotors an der Einbaustelle des Körpers (14) des Hilfsrahmens (12);
- Montieren von Kabeln an den Elektromotor, insbesondere durch Verschraubung; dann
- Montieren des abnehmbaren Querträgers (17) an den Körper (14) des Hilfsrahmens (12), insbesondere durch Verschraubung.

## Claims

1. Method for assembling a motor vehicle (11) with electric or hybrid drive, the motor vehicle comprising a cradle (12), the cradle comprising a body (14), which is intended to be assembled to a bodyshell (40), and a rear removable crossmember (17), the cradle comprising a first configuration in which said removable crossmember (17) is mounted on the body (14), first and second ends (17a, 17b) of said removable crossmember (17) being mounted on first and second ends (14a, 14b) of the body (14), respectively, and the cradle comprising a second configuration in which said removable crossmember (17) is demounted, thereby permitting the removal of said removable crossmember (17),
the assembly method comprising the following steps:
- arranging the electric motor at the location of the body (14) of the cradle (12);
- mounting cables on the electric motor, in particular by screwing; then
- mounting said removable crossmember (17) on the body (14) of the cradle (12), in particular by screwing.
